# DEMANDE DE BREVET EUROPEEN

(11) **EP 3 945 296 A1**
(43) Date de publication de la demande: **02.02.2022**
(21) Numéro de dépôt: 20305875.5
(22) Date de dépôt: 30.07.2020
(51) Int. Cl.: G01J 3/46, G01N 21/25, G01N 21/78

(54) **MESURE COLORIMÉTRIQUE SUR ÉCHANTILLON FLUIDIQUE AVEC CAPTEUR D'IMAGE**

(71) Demandeur: Vogo, 34000 Montpellier (FR)
(72) Inventeur: DAUDIN, Christophe, 34000 MONTPELLIER (FR); CARNIEL, Christophe, 34170 CASTELNAU LE LEZ (FR); DEDISSE, Daniel, 34730 PRADES LE LEZ (FR); SAGUIN, Pascal, 38830 CRETS EN BELLEDONNE (FR); KEIFLIN, Pierre, 31130 MAUGUIO-CARNON (FR)
(74) Mandataire: Germain Maureau

(57) **Abrégé**

L'invention concerne un procédé d'identification d'un résultat d'un test réalisé à partir d'un prélèvement fluidique (F), le prélèvement fluidique (F) étant contenu dans un récipient translucide (R), le récipient étant positionné sur une zone d'intérêt (ZR) du récipient et en regard d'une zone (ZS) dédiée du support (S). Des gammes de valeurs colorimétriques de référence (G1', G2', G3') et des références géométriques (QR1) sont imprimées sur le support (S) qui comporte également des valeurs colorimétriques de calibration (Ccal) imprimées dans l'au moins une zone de calibration (Zcal) de couleur.

## Description

### Domaine de l'invention

La présente invention concerne un procédé ainsi qu'un dispositif d'identification d'un résultat d'un test réalisé à partir d'un prélèvement fluidique.

### Art antérieur

Il est connu de procéder à des prélèvements fluidiques afin de réaliser des tests, par exemple dans le domaine de l'analyse médicale. Le test peut consister à mettre en présence d'un réactif le prélèvement fluidique. Le résultat des tests peut par exemple être identifié de façon colorimétrique, notamment en trempant un substrat comprenant le réactif dans le prélèvement. L'identification du résultat par une coloration sur le substrat peut être assisté par un traitement d'une image du substrat.

Toutefois, la fabrication d'un substrat enduit de réactif nécessite la mise en place d'un procédé de fabrication complexe.

La présente invention a pour but de résoudre tout ou partie des inconvénients mentionnés ci-dessus.

### Exposé de l'invention

A cet effet, la présente invention a pour objet un procédé selon le type précité, permettant l'identification d'un résultat d'un test réalisé à partir d'un prélèvement fluidique, le prélèvement fluidique étant contenu dans un récipient translucide et le procédé comprenant les étapes suivantes :
- Fourniture d'un support pour le récipient contenant le prélèvement fluidique;
- Positionnement du récipient en regard d'une zone dédiée du support;
- Capture d'une image numérique du support et du récipient positionné sur le support ;
- Détermination d'une zone d'intérêt du récipient occupée par au moins une partie d'intérêt du récipient dans l'image numérique ;
- Extraction d'une information colorimétrique relative à la zone d'intérêt du récipient dans l'image numérique;
- Identification du résultat du test sur la base de l'analyse de l'information colorimétrique.

Les dispositions selon l'invention permettent d'identifier le résultat d'un test réalisé directement à partir d'un prélèvement fluidique.

Le procédé peut en outre présenter une ou plusieurs des caractéristiques suivantes, prises seules ou en combinaison.

Selon une possibilité, le récipient translucide est hermétiquement fermé. Selon un exemple, un bouchon est rapporté sur le récipient pour le fermer. Cela donne la possibilité d'effectuer le test en disposant le récipient horizontalement ou verticalement sur le support S.

La partie d'intérêt peut correspondre à une partie translucide du récipient. En particulier, la partie d'intérêt peut correspondre à une partie translucide comprenant du prélèvement fluidique.

En d'autres termes, la détermination de la zone d'intérêt du récipient occupée par une partie d'intérêt du récipient dans l'image correspond à la détermination d'une position ou d'un emplacement d'une partie du récipient d'intérêt dans l'image du récipient.

En d'autre terme la zone d'intérêt du récipient est une portion d'image correspondant à une partie du récipient contenant un prélèvement fluidique.

Selon un mode de mise en œuvre, l'étape d'extraction d'une information colorimétrique relative à la zone d'intérêt du récipient est réalisée sur la base de la détermination d'un indicateur colorimétrique relatif à un ensemble de sous-zones de la zone d'intérêt du récipient. Une sous-zone peut correspondre à un pixel ou à un ensemble de pixels de l'image numérique.

Selon un mode de mise en œuvre, l'indicateur colorimétrique comprend une ou plusieurs coordonnées colorimétriques d'une sous-zone d'une image numérique dans un repère colorimétrique.

Selon un mode de mise en œuvre, l'indicateur colorimétrique comprend en outre des coordonnées géométriques d'abscisse et d'ordonnée d'une sous-zone d'une image numérique.

Selon un mode de mise en œuvre, l'indicateur colorimétrique est exprimé dans un repère colorimétrique HSV, pour Hue, Saturation, Value en anglais ou teinte, saturation, valeur en français.

Selon une possibilité, l'indicateur colorimétrique désigne une coordonnée colorimétrique H d'une sous-zone d'une image numérique.

Selon une possibilité, l'indicateur colorimétrique désigne une coordonnée colorimétrique H et des coordonnées géométriques d'abscisse et d'ordonnée d'une sous-zone d'une image numérique.

Selon une possibilité, l'indicateur colorimétrique désigne des coordonnées colorimétriques H, S et V d'une sous-zone d'une image numérique dans le repère colorimétrique HSV.

Selon un mode de mise en œuvre, le procédé comprend une étape de transposition entre un premier repère colorimétrique, par exemple RGB, et un deuxième repère colorimétrique de façon à exprimer l'indicateur colorimétrique dans un deuxième repère colorimétrique HSV.

Selon un mode de mise en œuvre, l'extraction de l'information colorimétrique comprend les étapes d'expression d'une distribution des sous-zones de la zone d'intérêt en fonction de valeurs de l'indicateur colorimétrique et de détermination de l'information colorimétrique sur la base d'un calcul d'une concentration de sous-zones dans la distribution.

La détermination de l'information colorimétrique sur la base d'un calcul d'une concentration de sous-zones dans la distribution permet d'éliminer un artefact présent dans la zone d'intérêt du récipient. En effet, ces dispositions permettent de déterminer l'information colorimétrique sur la base d'une zone homogène de la zone d'intérêt, en ne considérant pas des sous-zones correspondant à des artefacts.

Selon une possibilité, l'artefact est une bulle ou un reflet.

Selon une possibilité, l'extraction de l'information colorimétrique comprend une détermination d'un intervalle ou d'une portion d'espace de distribution dans lequel un critère relatif à la concentration de sous-zone est rempli et une détermination de l'information colorimétrique en fonction des valeurs des indicateurs colorimétriques correspondants aux sous-zones comprises dans l'intervalle ou la portion d'espace.

Selon un mode de réalisation, le critère relatif à la concentration correspond par exemple au dépassement d'un seuil ou à une valeur de maximum.

Selon un mode de réalisation, la détermination de l'intervalle ou de la portion d'espace est réalisée en plusieurs étapes successives, correspondant à la satisfaction de plusieurs critères successifs.

Selon un mode de mise en œuvre, l'au moins un indicateur colorimétrique désigne la coordonnée colorimétrique H dans le repère colorimétrique HSV et la distribution désigne une courbe plane d'un nombre de pixels en fonction d'une valeur de la coordonnée colorimétrique.

Selon un mode de mise en œuvre, l'au moins un indicateur colorimétrique désigne la coordonnée colorimétrique et les coordonnées géométriques d'abscisse et d'ordonnée et la distribution désigne une courbe dans un espace de dimension au moins 2.

Selon un mode de mise en œuvre, un algorithme de classification est mis en œuvre afin de regrouper dans des sphères des sous-zones ayant des valeurs de coordonnées proches.

A titre d'exemple, une sphère dont un produit d'un diamètre par une distance entre un centre de cette sphère et un axe de la coordonnée H est le plus élevé est retenue pour calculer une valeur de la coordonnée qui représente l'information colorimétrique à extraire.

En effet, ce produit désigne un nombre de sous-zones le plus élevé représentant une couleur vive (à forte valeur de saturation et donc de coordonnée S) et différentiable dans le cadre du procédé.

Dans ce cas, la coordonnée H est mesurée en degré comme étant un angle entre la droite passant par le centre de la sphère et un point situé sur l'axe de la coordonnée V, et un axe de la coordonnée S.

Selon une possibilité, l'étape d'extraction de l'information colorimétrique comprend une étape d'exclusion des sous-zones pour lesquelles une valeur de l'indicateur colorimétrique est inférieure à une valeur limite et/ou supérieure à une valeur de seuil de l'au moins un indicateur colorimétrique. Cette disposition permet

Selon une possibilité, l'étape de détermination d'une zone d'intérêt du récipient occupée par au moins une partie d'intérêt du récipient dans l'image est réalisée sur la base de références géométriques présentes sur le support.

Selon une possibilité, la zone d'intérêt du récipient occupée est estimée à partir de la zone dédiée.

Selon un mode de mise en œuvre, le résultat du test peut prendre plusieurs valeurs de résultat de test, une valeur de résultat de test correspondant à une gamme de valeurs colorimétriques de référence parmi une pluralité de gammes de valeurs colorimétriques de référence, et dans lequel l'étape d'identification du résultat du test sur la base de l'analyse de l'information colorimétrique comprend une comparaison d'une valeur de l'information colorimétrique avec les gammes de valeurs colorimétriques de référence.

Selon un mode de mise en œuvre, les gammes de valeurs colorimétriques de référence sont définies par des valeurs colorimétriques limites de référence enregistrées dans une unité de traitement.

Selon une possibilité, le procédé comprend des étapes de détermination d'au moins une zone de calibration de couleur comprenant une impression de valeurs colorimétriques de calibration imprimées sur le support, d'extraction d'une pluralité de valeurs colorimétriques de calibration imprimées dans l'au moins une zone de calibration de couleur, de comparaison entre des valeurs colorimétriques de calibration enregistrées dans l'unité de traitement et les valeurs colorimétriques de calibration imprimées sur le support, de détermination d'une correction de valeurs colorimétriques sur la base de la comparaison , d'Application de la correction de valeurs colorimétriques aux indicateurs colorimétriques la zone d'intérêt.

Selon un mode de réalisation, la correction est réalisée par l'application d'une matrice de correction.

Selon un mode de réalisation, le procédé comprend en outre l'étape de détermination d'au moins une zone de gammes correspondant à des gammes de valeurs colorimétriques de référence imprimées sur le support et dans lequel la comparaison d'une valeur de l'information colorimétrique avec les gammes de valeurs colorimétriques de référence comprend une comparaison de l'information colorimétrique avec les gammes colorimétriques de référence imprimées sur le support.
Selon une possibilité, l'étape d'identification du résultat du test comprend en outre une première sous-étape d'identification du résultat de test sur la base de gammes colorimétriques enregistrées dans l'unité de traitement., une deuxième sous-étape d'identification du résultat de test sur la base de gammes colorimétriques imprimées sur le support, et une sous-étape de comparaison des résultats des sous-étapes d'identification prenant en compte un résultat de la première sous étape et un résultat de la deuxième sous-étape.

Selon un mode de mise en œuvre, le procédé comprend une étape de comptage d'un nombre de sous-zones appartenant à chaque gamme de valeurs colorimétriques de référence.

Selon une possibilité, les gammes de couleurs de référence prennent en compte une couleur de la zone dédiée du support.

Selon un mode de mise en œuvre, l'étape d'identification du résultat du test est réalisée sur la base de l'analyse de l'information colorimétrique et sur la base d'un indicateur de confiance obtenu par un programme d'apprentissage automatique.

Selon un mode de mise en œuvre, le procédé comprend une étape de Transmission vers le programme d'apprentissage automatique d'un ensemble d'information relatif à un résultat du test, une étape d'analyse de l'ensemble d'information par le programme d'apprentissage automatique, et une étape d'élaboration par le programme d'apprentissage automatique d'un indicateur de confiance relatif au résultat du test.

Selon un mode de mise en œuvre, le procédé comprend une phase d'apprentissage comprenant les étapes de stockage d'une pluralité d'ensembles d'informations relatives à une pluralité de tests et des résultats de test correspondants dans un emplacement informatique dédié, de collecte de valeurs de résultats de test de référence pour chacun des tests de la pluralité de test, d'injection dans un programme d'apprentissage automatique d'une pluralité d'ensembles d'information relative à la pluralité de tests, et d'analyse de la pluralité d'ensembles d'informations et des résultats de test par un programme d'apprentissage automatique.

Selon un mode de réalisation, on procède à un transfert du résultat du test dans un emplacement numérique dédié.

Selon une possibilité, l'étape d'identification du résultat du test comprend en outre une troisième sous-étape d'identification du résultat de test sur la base de l'analyse de l'information colorimétrique et sur la base de l'indicateur de confiance obtenu par un programme d'apprentissage automatique, et dans lequel la sous-étape de comparaison des résultats des sous-étapes d'identification prend en compte un résultat de la troisième sous-étape d'identification.

La présente invention a en outre pour objet un dispositif d'identification d'un résultat d'un test réalisé à partir d'un prélèvement fluidique comprenant :
- un récipient translucide destiné à contenir le prélèvement fluidique ;
- un support pour le récipient contenant le prélèvement fluidique comprenant une zone dédiée du support en regard de laquelle est placé le récipient ;
- un dispositif de capture d'une image numérique du récipient comprenant une zone d'intérêt dudit récipient ;
- et une unité de traitement de l'image numérique agencée pour mettre en œuvre le procédé.

Le dispositif peut en outre présenter une ou plusieurs des caractéristiques suivantes, prises seules ou en combinaison.

Selon un mode de réalisation, le support pour le récipient comporte au moins une zone de valeur colorimétrique de calibration et au moins un motif d'identification.

Selon une possibilité, le récipient translucide est hermétiquement fermé. Selon un exemple, un bouchon est rapporté sur le récipient pour le fermer. Cela donne la possibilité d'effectuer le test en disposant le récipient horizontalement ou verticalement sur le support.

Selon un mode de réalisation, le motif d'identification peut être un motif de type code bar ou bien code QR.

### Brève description des figures

L'invention sera mieux comprise à l'aide de la description détaillée qui est exposée ci-dessous en regard des dessins annexés dans lesquels :
[Fig.1] est un organigramme présentant des étapes générales réalisées lors de l'exécution d'un procédé décrit.
[Fig.2] est une représentation d'un support sur lequel est posé un récipient contenant un prélèvement fluidique.
[Fig.3] est une séquence d'images présentant des étapes d'extraction d'une information colorimétrique à analyser.
[Fig.4] est une séquence de graphiques présentant une extraction d'une information colorimétrique selon un premier mode de mise en œuvre du procédé décrit dans [Fig.1].
[Fig.5] est un ensemble de graphiques présentant une extraction d'une information colorimétrique selon un deuxième mode de mise en œuvre du procédé décrit dans [Fig.1].
[Fig.6] est un ensemble de graphiques présentant une extraction d'une information colorimétrique selon un troisième mode de mise en œuvre du procédé décrit dans [Fig.1].
[Fig.7] est un diagramme représentant des valeurs d'un indicateur colorimétrique relatives à des gammes de valeur colorimétriques de référence.
[Fig.8] est une représentation d'un support sur lequel une zone dédiée du support présente une couleur de fond.
[Fig.9] est un organigramme présentant des étapes à exécuter pour une identification de l'information colorimétrique selon un mode de réalisation du procédé décrit dans [Fig.1].
[Fig.10] est un organigramme présentant une étape à exécuter pour une identification de l'information colorimétrique selon un mode de mise en œuvre du procédé décrit dans [Fig.1].
[Fig.11] est un diagramme représentant l'identification de l'information colorimétrique selon un mode de mise en œuvre du procédé décrit dans [Fig.1] et faisant usage d'un programme d'apprentissage automatique.
[Fig.12] est un organigramme présentant des étapes exécutées lors d'une phase d'apprentissage du programme d'apprentissage automatique décrit dans [Fig.11].
[Fig.13] est un organigramme présentant des étapes exécutées lors d'une phase d'utilisation du programme d'apprentissage automatique décrit dans [Fig.11] pour la mise en œuvre du procédé décrit dans [Fig.1].

### Description en référence aux figures

Dans la description détaillée qui va suivre les figures définies ci-dessus, les mêmes éléments ou les éléments remplissant des fonctions identiques pourront conserver les mêmes références de manière à simplifier la compréhension de l'invention.

### Description du contexte

Le procédé d'identification d'un résultat d'un test peut faire suite à une prise d'échantillon et d'application du réactif. A titre d'exemple, l'échantillon peut être un échantillon de fluide corporel comme par exemple un échantillon de sang ou de salive. En particulier, dans le cas d'un échantillon de salive le réactif peut viser à détecter la présence d'un pathogène, comme par exemple un virus.

Ainsi, des éprouvettes ou récipient contenant quelques millilitres d'un réactif sensible à la présence de Virus sont mises à disposition du personnel médical. Une prise d'échantillon salivaire est réalisée, puis un mélange dans une éprouvette ou récipient de l'échantillon salivaire avec le réactif. Le récipient contenant le réactif et la salive peut être chauffé, par exemple pendant 30 minutes à 60°. L'action du réactif donne une couleur au mélange dans le récipient qui correspond à un résultat positif ou négatif, ou à un résultat ambigu.

Il est à noter que le procédé décrit après pourrait être utilisé pour d'autres applications d'identification de résultat de test sur des prélèvements fluidiques dans lesquels la couleur ou les propriétés optiques du prélèvement ou du mélange du prélèvement avec un réactif sont caractéristiques du résultat du test.

### Description générale du procédé

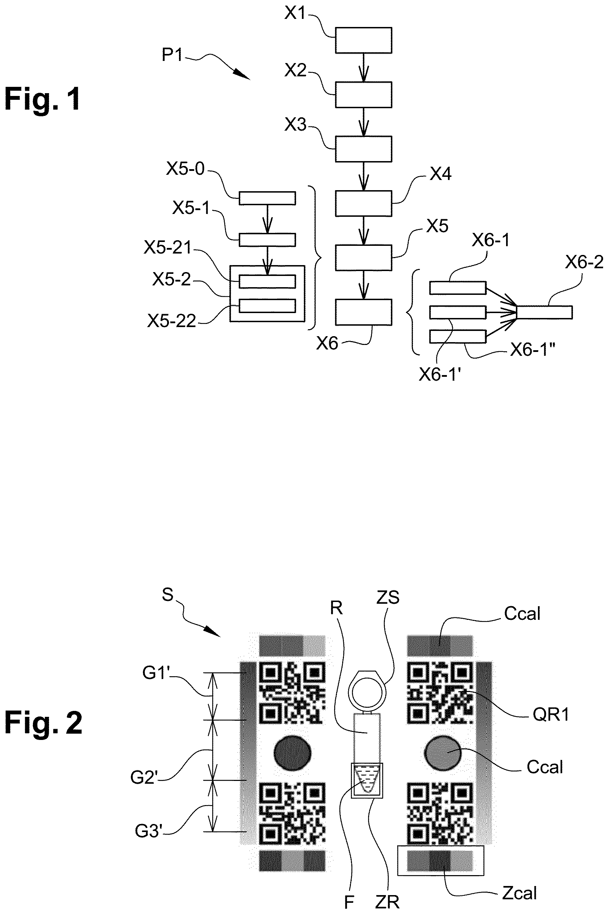

Dans la figure 1, on présente des étapes d'exécution du procédé P1 d'identification du résultat du test.

Ainsi, une première étape X1 comprend la fourniture X1 d'un support S pour un récipient R contenant un prélèvement fluidique F.

Au cours d'une deuxième étape X2, on effectue le positionnement du récipient R en regard d'une zone ZS dédiée du support S. Le récipient translucide R peut être hermétiquement fermé, par exemple en rapportant un bouchon sur le récipient. Cela donne la possibilité d'effectuer le test en disposant le récipient horizontalement ou verticalement sur le support S.

Une troisième étape X3 comprend une capture X3 d'une image numérique du support S et du récipient R positionné sur le support S, par exemple au moyen d'un appareil photo ou d'un terminal de communication mobile.

Dans une étape X4, on procède à la détermination d'une zone d'intérêt du récipient ZR occupée par au moins une partie d'intérêt du récipient dans l'image numérique. La partie d'intérêt peut correspondre à une partie translucide du récipient. En particulier, la partie d'intérêt peut correspondre à une partie translucide comprenant le prélèvement fluidique F. En d'autres termes, la détermination de la zone d'intérêt ZR du récipient occupé par une partie d'intérêt du récipient dans l'image correspond à la détermination d'une position ou d'un emplacement d'une partie du récipient d'intérêt dans l'image du récipient. Ainsi, la zone d'intérêt du récipient ZR est une portion d'image correspondant à une partie du récipient contenant un prélèvement fluidique F.

L'étape de détermination X4 d'une zone d'intérêt du récipient ZR occupée par au moins une partie d'intérêt du récipient dans l'image est réalisée sur la base de références géométriques QR1 présentes sur le support S.

Selon une possibilité, les références géométriques QR1 de la figure 2 présentes sur le support S désignent une pluralité de codes QR par exemple quatre codes QR.

Selon une possibilité, la position de la zone d'intérêt du récipient ZR présentée à la figure 2 est définie par la position de la pluralité de codes QR, par exemple par une intersection de droites D1, D2 reliant les codes QR diagonalement opposés sur le support S.

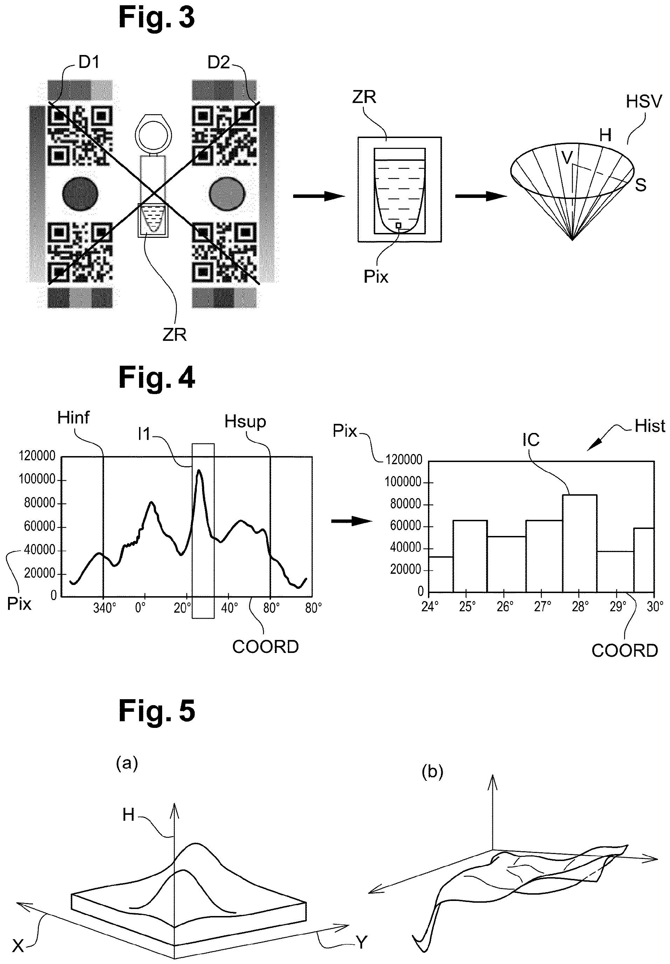

A partir de l'intersection des droites D1, D2, visibles dans la figure 3, une pluralité de sous-zones Pix constituant la zone d'intérêt ZR du récipient est extraite.

La zone d'intérêt du récipient ZR occupée peut être estimée à partir de la zone dédiée du support ZS présentée à la figure 2 dont la position est connue par rapport à la position des références géométriques.

Ensuite, on procède à une extraction d'une information colorimétrique IC relative à la zone d'intérêt du récipient ZR dans l'image numérique au cours d'une cinquième étape X5.

Enfin, une sixième étape comprend une identification X6 du résultat du test sur la base de l'analyse de l'information colorimétrique IC.

### Extraction de l'information colorimétrique

Dans le procédé P1, l'étape d'extraction X5 d'une information colorimétrique IC relative à la zone d'intérêt du récipient ZR est réalisée sur la base de la détermination d'un indicateur colorimétrique COORD relatif à un ensemble de sous-zones Pix de la zone d'intérêt du récipient ZR. On entend par information colorimétrique une valeur d'un indicateur colorimétrique COORD dominant relatif au prélèvement fluidique F. Une sous-zone Pix d'une image numérique peut par exemple désigner un pixel.

Un indicateur colorimétrique COORD peut comprendre une coordonnée colorimétrique H ou plusieurs coordonnées colorimétriques H, S, V d'une sous-zone Pix d'une image numérique dans un repère colorimétrique HSV.

Selon une possibilité, les indicateurs colorimétriques COORD sont exprimés dans un repère colorimétrique HSV, par exemple comme celui de la figure 3.

Selon une possibilité, l'au moins un indicateur colorimétrique COORD désigne une coordonnée colorimétrique H d'une sous-zone Pix d'une image numérique.

Selon une autre possibilité, l'au moins un indicateur colorimétrique COORD désigne une coordonnée colorimétrique H et des coordonnées géométriques d'abscisse X et d'ordonnée Y d'une sous-zone Pix d'une image numérique.

Selon une autre possibilité, l'au moins un indicateur colorimétrique COORD désigne des coordonnées colorimétriques H, S et V d'une sous-zone Pix d'une image numérique dans le repère colorimétrique HSV.

Le procédé P1 peut comprendre en outre une étape de transposition entre un premier repère colorimétrique, par exemple RGB, et un deuxième repère colorimétrique de façon à exprimer les indicateurs colorimétriques dans un deuxième repère colorimétrique HSV. En effet, l'image numérique peut être capturé à l'aide d'un dispositif de capture, par exemple un capteur de type CMOS, qui fournit des images dans un référentiel RGB. Pour mesurer une valeur colorimétrique, un référentiel HSV pour Hue Saturation Value en anglais peut être utilisé. Dans le référentiel HSV, une coordonnée colorimétrique est extraite afin d'obtenir l'information colorimétrique relative à la zone d'intérêt ZR. Le passage du référentiel RGB au référentiel HSV et inversement se fait à travers une série de calculs connus de la technique antérieure.

La figure 3 illustre la détermination de la zone d'intérêt ZR du récipient occupé par une partie d'intérêt du récipient dans l'image numérique à partir de l'intersection des droites D1, D2, la représentation de la zone d'intérêt ZR du récipient comme un ensemble de sous-zones Pix dans l'image numérique et la transposition de la zone d'intérêt ZR du récipient dans un repère colorimétrique HSV.

L'étape X5 d'extraction de l'information colorimétrique comprend en particulier :
- une étape d'expression X5-1 d'une distribution des sous-zones de la zone d'intérêt ZR en fonction de valeurs de l'indicateur colorimétrique COORD,
- une étape de détermination X5-2 de l'information colorimétrique IC sur la base d'un calcul d'une concentration de sous-zones Pix dans la distribution.

L'étape d'extraction de l'information colorimétrique peut aussi comprendre une étape d'exclusion X5-0 des sous-zones Pix pour lesquelles une valeur de l'indicateur colorimétrique COORD est inférieure à une valeur limite Hsup et/ou supérieure à une valeur de seuil Hinf de l'au moins un indicateur colorimétrique COORD. Cette étape d'exclusion peut intervenir par exemple avant l'étape X5-1 ou avant l'étape X5-2.

L'étape d'extraction X5 d'une information colorimétrique IC relative à la zone d'intérêt du récipient ZR sur la base d'un calcul d'une concentration de sous-zones dans la distribution peut permettre d'éliminer un artefact présent dans la zone d'intérêt ZR du récipient comme par exemple une bulle ou un reflet. Différents modes de mise en œuvre de l'étape d'extraction sont décrit ci-après.

### A. Premier mode d'extraction de l'information colorimétrique

La figure 4 présente un premier mode d'extraction de l'information colorimétrique IC à partir de l'image numérique dans lequel l'indicateur colorimétrique COORD désigne la coordonnée colorimétrique H, mesurée en degrés par exemple dans le repère colorimétrique HSV et la distribution désigne une courbe d'un nombre de sous-zones Pix en fonction d'une valeur de la coordonnée colorimétrique H.

Dans ce mode d'extraction de l'information colorimétrique IC, on procède d'abord à l'exclusion X5-0 des sous-zones Pix pour lesquelles une valeur de l'indicateur colorimétrique COORD est inférieure à une valeur limite Hsup et/ou supérieure à une valeur de seuil Hinf de l'au moins un indicateur colorimétrique COORD comme le montre la figure 4.

L'étape d'expression X5-1 d'une distribution des sous-zones de la zone d'intérêt ZR en fonction de valeurs de l'indicateur colorimétrique COORD est réalisée en indiquant pour chaque valeur l'indicateur colorimétrique COORD un nombre de sous-zones Pix.

L'étape de détermination X5-2 de l'information colorimétrique IC sur la base d'un calcul d'une concentration de sous-zones Pix dans la distribution est ensuite réalisée selon les deux étapes suivantes :
- une étape de détermination X5-21 d'un intervalle ou d'une portion d'espace de distribution dans lequel un critère relatif à la concentration de sous-zone est rempli,
- une étape de détermination X5-22 de l'information colorimétrique en fonction des valeurs des indicateurs colorimétriques correspondants aux sous-zones comprises dans l'intervalle ou la portion d'espace I1.

Dans une premier temps, l'étape de détermination X5-21 d'un intervalle de distribution dans lequel un critère relatif à la concentration de sous-zone est rempli est réalisée. En particulier, sur la base de la distribution définie, on utilise un premier pas d'analyse relatif à la coordonnée colorimétrique H. Le premier pas d'analyse peut par exemple avoir une valeur sensiblement égale à 6°. On effectue un calcul d'une moyenne du nombre de sous-zones au sein d'un intervalle correspondant au pas, notamment un calcul d'une moyenne glissante sur des valeurs de la coordonnée colorimétrique H. On détermine ainsi un premier intervalle un utilisant un critère correspondant par exemple à la plus grande valeur moyenne.

Il est possible de procéder à une deuxième étape de détermination d'un intervalle en réalisant une analyse sur le premier intervalle en utilisant un deuxième pas d'analyse inférieur au premier pas d'analyse. L'histogramme Hist de la figure 4 représente la réalisation de cette analyse. Le deuxième pas d'analyse peut par exemple avoir une valeur sensiblement égale à 1°. On peut par exemple sélectionner un seconde intervalle en utilisant un critère correspondant par exemple à la plus grande valeur du nombre de sous-zone dans cet intervalle de pas 1°.

L'étape de détermination X5-22 de l'information colorimétrique en fonction des valeurs des indicateurs colorimétriques correspondants aux sous-zones comprises dans l'intervalle peut être réalisé en définissant l'information colorimétrique IC comme une valeur de la coordonnée colorimétrique H du second intervalle comprenant un nombre de sous-zones le plus élevé est retenue, par exemple la valeur médiane de cet intervalle. Sur l'exemple d'histogramme de la figure 4, cette valeur correspondrait à 28°.L'information colorimétrique IC relative à l'image numérique est donc formée par la valeur de la coordonnée colorimétrique H majoritaire au sein du deuxième intervalle d'analyse et pertinente en ce qu'elle est relative à une valeur colorimétrique identifiable dans les gammes de valeurs colorimétriques de références G1, G2, G3.

### B. Deuxième mode d'extraction de l'information colorimétrique

Dans ce mode d'extraction de l'information colorimétrique IC présenté à la figure 5, l'étape d'expression X5-1 d'une distribution des sous-zones de la zone d'intérêt ZR en fonction de valeurs de l'indicateur colorimétrique COORD est réalisée dans un premier temps. En particulier, l'indicateur colorimétrique comprend dans ce cas une valeur de H pour la sous-zone et des valeurs de coordonnées géométriques d'abscisse X et d'ordonnée Y définissant la position de la sous-zone dans l'image. En pratique, l'expression de cette distribution correspond à la projection de l'image dans un espace à trois dimension telle que représenté sur les figures 5a et 5b.

L'étape de détermination X5-2 de l'information colorimétrique IC sur la base d'un calcul d'une concentration de sous-zones Pix dans la distribution est ensuite réalisée.

En particulier, sur la base de la distribution définie, une analyse est réalisée en utilisant des sous-ensembles d'analyse, chaque sous-ensemble d'analyse étant défini par des coordonnées géométriques d'abscisse X et d'ordonnée Y et constitué d'une pluralité de sous-zones Pix, par exemple 49 pixels ou bien 81 pixels. L'ensemble de la portion d'intérêt de l'image est parcouru par le sous-ensemble avec par exemple un pas de 1 pixel.

Au sein de chaque sous-ensemble, le premier mode d'extraction de l'information colorimétrique est mis en œuvre afin d'identifier pour chaque sous-ensemble d'analyse la coordonnée colorimétrique H représentative du sous-ensemble d'analyse et le nombre de pixels ou sous-zone correspondant à cette valeur. Le nombre de sous-ensemble possédant une même valeur de la coordonnée colorimétrique H est décompté. Le nombre de sous-ensemble le plus élevé détermine alors l'information colorimétrique IC relative à l'image numérique.

### C. Troisième mode d'extraction de l'information colorimétrique

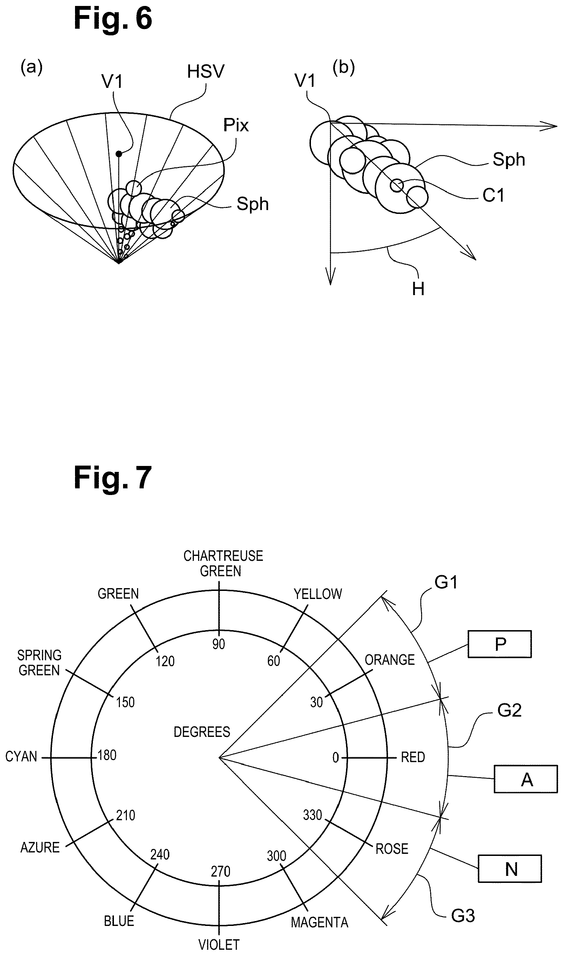

Dans ce mode d'extraction de l'information colorimétrique IC présenté à la figure 6, l'étape d'expression X5-1 d'une distribution des sous-zones de la zone d'intérêt ZR en fonction de valeurs de l'indicateur colorimétrique COORD est réalisée dans un premier temps. L'indicateur colorimétrique correspond ici à des valeurs des coordonnées colorimétriques H, S, V des sous-zones Pix relatifs à l'image numérique. Ces valeurs de l'indicateur colorimétrique sont projetées dans le repère colorimétrique HSV.

L'étape de détermination X5-2 de l'information colorimétrique IC sur la base d'un calcul d'une concentration de sous-zones Pix dans la distribution est ensuite réalisée selon les deux étapes suivantes :
- une étape de détermination X5-21 d'un intervalle ou d'une portion d'espace de distribution dans lequel un critère relatif à la concentration de sous-zone est rempli,
- une étape de détermination X5-22 de l'information colorimétrique en fonction des valeurs des indicateurs colorimétriques correspondants aux sous-zones comprises dans l'intervalle ou la portion d'espace I1.

Dans une premier temps, l'étape de détermination X5-21 d'un intervalle de distribution dans lequel un critère relatif à la concentration de sous-zone est rempli est réalisée. En particulier, sur la base de la distribution définie, Un algorithme de classification est alors exécuté afin de regrouper dans des portions d'espace sous forme de sphères les sous-zones Pix ayant des valeurs de coordonnées H, S, V proches.

Le critère utilisé peut être de retenir une sphère Sph de centre C1 dont le produit d'un diamètre par une distance entre le centre C1 de cette sphère et un axe de la coordonnée V est le plus élevé, est retenue.

En effet, ce produit désigne un nombre de sous-zones Pix le plus élevé représentant une couleur vive (à forte valeur de saturation et donc de coordonnée S) et pouvant être distinguée.

Dans ce cas, la coordonnée H est mesurée en degrés comme étant un angle entre la droite passant par le centre C1 de la sphère Sph et un point V1 situé sur l'axe de la coordonnée V, et un axe de la coordonnée S. Cette coordonnée H représente alors l'information colorimétrique IC.

### Identification du résultat du test

Une fois que l'information colorimétrique IC est extraite à partir de la zone d'intérêt du récipient, celle-ci est comparée avec des gammes de valeurs colorimétriques de référence G1, G2, G3, G1', G2', G3' afin d'obtenir le résultat du test.

Le résultat du test peut prendre plusieurs valeurs de résultat de test P, N, A, désignant un résultat de test positif, négatif ou ambigu et une valeur de résultat de test correspondant à une gamme de valeurs colorimétriques de référence parmi une pluralité de gammes de valeurs colorimétriques de référence G1, G2, G3, G1', G2', G3' visibles sur les figures 2 et 7 et dans lequel l'étape d'identification X6 du résultat du test sur la base de l'analyse de l'information colorimétrique IC comprend une comparaison d'une valeur de l'information colorimétrique avec les gammes de valeurs colorimétriques de référence G1, G2, G3, G1', G2', G3'.

Selon un mode de mise en œuvre, les gammes de valeurs colorimétriques de référence G1, G2, G3 sont définies par des valeurs colorimétriques limites de référence enregistrées dans une unité EC de traitement tandis que les gammes de valeurs colorimétriques de référence G1', G2', G3' sont définies par des valeurs colorimétriques limites de référence imprimées sur le support S.

La valeur de l'indicateur colorimétrique IC retenue peut être influencée en fonction notamment de 2 paramètres :
- Les conditions de luminosité : Plein Soleil, Espace sombre, ...
- les caractéristiques des capteurs CMOS des caméras qui ont beaucoup de disparité suivant les marques et entre les produits d'une même marque.

Pour diminuer les erreurs de mesure dues à ces perturbations, deux modes d'identification tenant compte de ces perturbations sont définies ci-dessous

### Mode Absolu

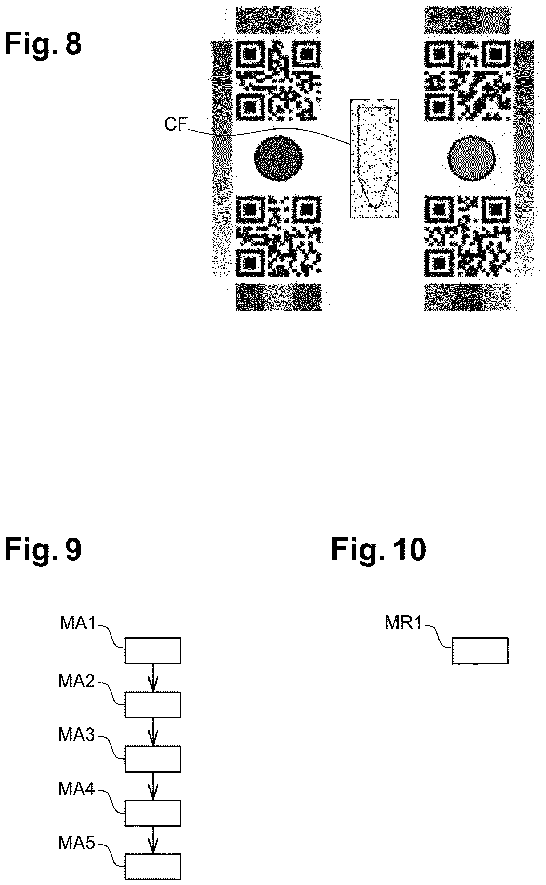

Un premier mode d'identification du résultat du test représenté sur la figure 9, dit « mode absolu », comprend des étapes de détermination MA1 d'au moins une zone de calibration de couleur Zcal comprenant une impression de valeurs colorimétriques de calibration Ccal imprimées sur le support S, d'extraction MA2 d'une pluralité de valeurs colorimétriques de calibration Ccal imprimées dans l'au moins une zone de calibration Zcal de couleur, de comparaison MA3 entre des valeurs colorimétriques de calibration enregistrées dans l'unité EC de traitement et les valeurs colorimétriques de calibration Ccal imprimées sur le support S, une détermination MA4 d'une correction de valeurs colorimétriques sur la base de la comparaison, et une application MA5 de la correction de valeurs colorimétriques aux indicateurs colorimétriques la zone d'intérêt ZR.
Selon un mode de mise en œuvre, la correction est réalisée par l'application d'une matrice de correction.

### Mode Relatif

Un deuxième mode d'identification du résultat du test, dit « mode relatif », peut comprendre une étape de détermination MR1 d'au moins une zone de gammes correspondant à des gammes de valeurs colorimétriques de référence G1', G2', G3' imprimées sur le support S, et dans lequel la comparaison d'une valeurde l'information colorimétrique IC avec les gammes de valeurs colorimétriques de référence G1', G2', G3' comprend une comparaison de l'information colorimétrique IC avec les gammes colorimétriques de référence G1', G2', G3' imprimées sur le support S.

### Combinaison du mode relatif et du mode absolu

Il est possible que l'étape d'identification X6 du résultat du test comprenne en outre une première sous-étape d'identification X6-1 du résultat de test sur la base de gammes colorimétriques G1, G2, G3, une deuxième sous-étape d'identification X6-1' du résultat de test sur la base de gammes colorimétriques G1', G2', G3', et une sous-étape de comparaison X6-2 des résultats des sous-étapes d'identification prenant en compte un résultat de la première sous étape X6-1 et un résultat de la deuxième sous-étape X6-1'.

Ainsi, l'identification selon les deux modes définis ci-dessus sont exécutés de façon parallèle.

Si les modes ne donnent pas le même résultat (Positif ou Ambigu ou Négatif) le procédé est relancé depuis le début à partir de la capture d'image.

Il est possible de prévoir que le test est défini comme non-réalisable si après un nombre prédéfini de tentatives les deux modes ne donnent pas le même résultat.

### Identification du résultat de test par comptage du nombre de sous-zones

On peut par ailleurs identifier le résultat du test par une étape de comptage d'un nombre de sous-zones appartenant à chaque gamme de valeurs colorimétriques de référence G1, G2, G3.

### Prise en compte de la couleur de fond

Selon une possibilité, les gammes de couleurs de référence G1', G2', G3' prennent en compte une couleur CF de la zone dédiée du support ZS comme montré à la figure 8, on dit alors que l'identification du résultat du test se fait à travers une mesure de turbidité du prélèvement fluidique F.

### Utilisation d'un programme d'apprentissage automatique

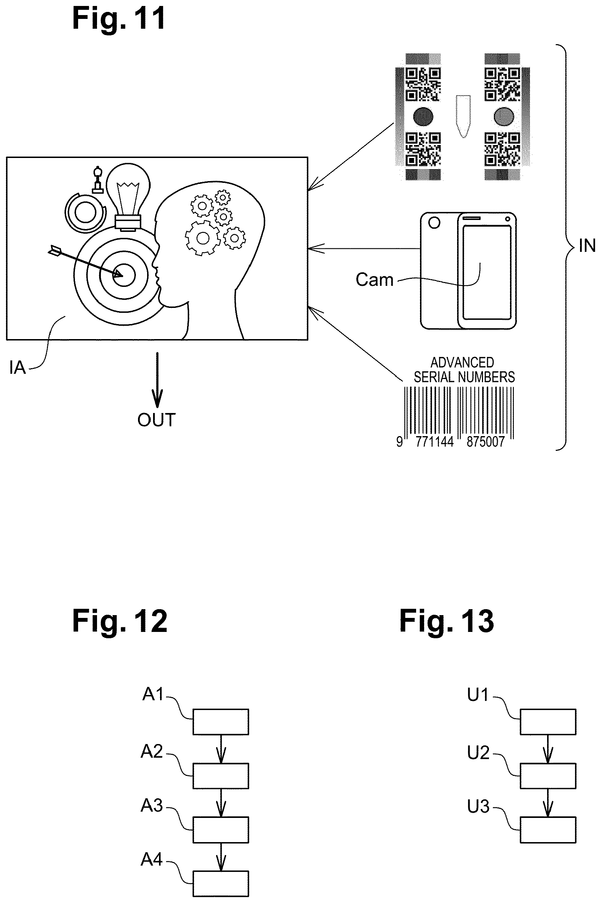

L'étape d'identification X6 du résultat du test peut être réalisée sur la base de l'analyse de l'information colorimétrique IC et sur la base d'un indicateur de confiance OUT obtenu par un programme d'apprentissage automatique IA comme le montre la figure 11.

Ainsi, l'utilisation d'un programme d'apprentissage automatique pour identifier le résultat du test peut comprendre une phase d'utilisation comprenant une étape de transmission U1 vers le programme d'apprentissage automatique IA d'un ensemble d'information IN relatif à un résultat du test T, une étape d'analyse U2 de l'ensemble d'information IN par le programme d'apprentissage automatique IA, et une étape d'élaboration U3 par le programme d'apprentissage automatique IA d'un indicateur de confiance OUT relatif au résultat du test T.

Selon une possibilité, l'identification du résultat du test T peut être supervisée par un opérateur humain, par exemple par une personne qualifiée pour le test considéré comme un médecin, sur la base de l'image numérique et de l'indicateur de confiance OUT.

L'ensemble d'information peut comprendre notamment l'image numérique ou une portion de celle-ci, une ou plusieurs caractéristiques du dispositif de capture d'image comme par exemple une identification par un numéro de série.

Le procédé P1 peut comprendre en outre une phase d'apprentissage comprenant une étape de stockage A1 d'une pluralité d'ensembles d'informations IN relatives à une pluralité de tests et des résultats de test correspondants dans un emplacement informatique dédié, une étape de collecte A2 de valeurs de résultats de test de référence pour chacun des tests de la pluralité de test, injection A3 dans un programme d'apprentissage automatique IA d'une pluralité d'ensembles d'information IN relative à la pluralité de tests, une étape d'analyse A4 de la pluralité d'ensembles d'informations IN et des résultats de test par un programme d'apprentissage automatique IA.

Selon un mode de mise en œuvre, on procède à un transfert du résultat du test dans un emplacement numérique dédié.

Ainsi, l'étape d'identification X6 du résultat du test peut comprendre en outre une sous-étape d'identification X6-1" du résultat de test sur la base de l'analyse de l'information colorimétrique IC et sur la base de l'indicateur de confiance OUT obtenu par un programme d'apprentissage automatique IA, et dans lequel la sous-étape de comparaison X6-2 des résultats des sous-étapes d'identification prend en compte un résultat de la sous-étape d'identification X6-1".

Plusieurs mode de prise en compte de l'analyse par le programme d'apprentissage automatique sont donc possibles.

Selon une première possibilité, un ou deux modes d'identification du résultat du test sur la base de l'information colorimétriques selon les étapes X6-1 et X6-1' sont mis en œuvre. Le programme d'apprentissage automatique est utilisé dans le cas où un résultat ambigu est identifié, afin de définir si sur la base de l'entrainement sur des photos réelles, un résultat positif ou négatif peut être identifié.

Selon une deuxième possibilité, un ou deux modes d'identification du résultat du test sur la base de l'information colorimétriques selon les étapes X6-1 et X6-1' sont mis en œuvre. Le programme d'apprentissage automatique est utilisé dans tous les cas afin de fournir un résultat sur la base de l'entrainement sur des photos réelles. Ainsi, les identifications selon les deux ou trois modes sont exécutés de façon parallèle. Si les modes ne donnent pas le même résultat (Positif ou Ambigu ou Négatif) le procédé est relancé depuis le début à partir de la capture d'image. Il est possible de prévoir que le test est défini comme non-réalisable si après un nombre prédéfini de tentatives les différents modes ne donnent pas le même résultat.

Selon une troisième possibilité, un ou deux modes d'identification du résultat du test sur la base de l'information colorimétriques selon les étapes X6-1 et X6-1' sont mis en œuvre. Le programme d'apprentissage automatique est utilisé dans tous les cas afin de fournir un résultat sur la base de l'entrainement sur des photos réelles. Ainsi, les identifications selon les deux ou trois modes sont exécutés de façon parallèle. Un poids est attribué à chaque mode, le résultat final étant donné en fonction du poids de chaque mode.

### Dispositif d'identification du résultat du test

Pour la mise en œuvre du procédé P1, on utilise un dispositif D d'identification d'un résultat d'un test T réalisé à partir d'un prélèvement fluidique F comprenant un récipient R translucide destiné à contenir le prélèvement fluidique F, un support S pour le récipient R contenant le prélèvement fluidique F comprenant une zone dédiée du support ZS en regard de laquelle est placé le récipient R, un dispositif Cam de capture d'une image numérique du récipient R comprenant une zone d'intérêt ZR dudit récipient R, et une unité EC de traitement de l'image numérique agencée pour mettre en œuvre le procédé P1.

Le support S pour le récipient R présenté à la figure 2 comporte au moins une zone Zcal de valeur colorimétrique de calibration Ccal et au moins un motif d'identification QR1.

Selon une possibilité, le récipient translucide R est hermétiquement fermé. Selon un exemple, un bouchon est rapporté sur le récipient pour le fermer. Cela donne la possibilité d'effectuer le test en disposant le récipient horizontalement ou verticalement sur le support S. Selon un mode de réalisation, le motif d'identification peut être un motif de type code bar ou bien code QR.

Le récipient translucide peut par exemple être une éprouvette et le moyen de capture d'une image numérique peut être un téléphone de type smartphone.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'identification d'un résultat d'un test réalisé à partir d'un prélèvement fluidique (F), le prélèvement fluidique (F) étant contenu dans un récipient translucide (R) et le procédé comprenant les étapes suivantes :
• Fourniture (X1) d'un support (S) pour le récipient (R) contenant le prélèvement fluidique (F) ;
• Positionnement (X2) du récipient en regard d'une zone dédiée (ZS) du support (S) ;
• Capture (X3) d'une image numérique du support (S) et du récipient (R) positionné sur le support (S);
• Détermination (X4) d'une zone d'intérêt du récipient (ZR) occupée par au moins une partie d'intérêt du récipient dans l'image numérique ;
• Extraction (X5) d'une information colorimétrique (IC) relative à la zone d'intérêt du récipient (ZR) dans l'image numérique;
• Identification (X6) du résultat du test sur la base de l'analyse de l'information colorimétrique (IC).

2. Procédé selon la revendication 1 dans lequel l'étape d'extraction (X5) d'une information colorimétrique (IC) relative à la zone d'intérêt du récipient (ZR) est réalisée sur la base de la détermination d'un indicateur colorimétrique (COORD) relatifs à un ensemble de sous-zones (Pix) de la zone d'intérêt du récipient (ZR).

3. Procédé selon l'une quelconque des revendications précédentes, dans lequel l'indicateur colorimétrique (COORD) comprend une ou plusieurs coordonnées colorimétriques (H, HSV) d'une sous-zone (Pix) d'une image numérique dans un repère colorimétrique (HSV).

4. Procédé selon la revendication 3, dans lequel l'indicateur colorimétrique (COORD) comprend en outre des coordonnées géométriques d'abscisse (X) et d'ordonnée (Y) d'une sous-zone (Pix) d'une image numérique.

5. Procédé selon l'une quelconque des revendications précédentes, dans lequel l'extraction (X5) de l'information colorimétrique (IC) comprend les étapes suivantes :
• Expression (X5-1) d'une distribution des sous-zones (Pix) de la zone d'intérêt (ZR) en fonction de valeurs de l'indicateur colorimétrique (COORD) ;
• Détermination (X5-2) de l'information colorimétrique (IC) sur la base d'un calcul d'une concentration de sous-zones dans la distribution.

6. Procédé selon la revendication 5, dans lequel l'étape de détermination (X5-3) de l'information colorimétrique (IC) comprend :
• Détermination (X5-21) d'un intervalle (I1) ou d'une portion d'espace de distribution dans lequel un critère relatif à la concentration de sous-zone (Pix) est rempli ;
• Détermination (X5-22) de l'information colorimétrique (IC) en fonction des valeurs des indicateurs colorimétriques correspondants aux sous-zones (Pix) comprises dans l'intervalle ou la portion d'espace.

7. Procédé selon l'une quelconque des revendications précédentes dans lequel l'étape d'extraction (X5) de l'information colorimétrique (IC) comprend une étape d'exclusion (X5-0) des sous-zones (Pix) pour lesquelles une valeur de l'indicateur colorimétrique (COORD) est inférieure à une valeur limite (Hsup)et/ou supérieure à une valeur de seuil (Hinf) de l'au moins un indicateur colorimétrique (COORD).

8. Procédé selon l'une quelconque des revendications précédentes dans lequel le résultat du test peut prendre plusieurs valeurs de résultat de test (P, N, A), une valeur de résultat de test correspondant à une gamme de valeurs colorimétriques de référence parmi une pluralité de gammes de valeurs colorimétriques de référence (G1, G2, G3, G1', G2', G3'), et dans lequel l'étape d'identification (X6) du résultat du test sur la base de l'analyse de l'information colorimétrique (IC) comprend une comparaison d'une valeur de l'information colorimétrique (IC) avec les gammes de valeurs colorimétriques de référence (G1, G2, G3, G1', G2', G3').

9. Procédé selon la revendication 8, dans lequel les gammes de valeurs colorimétriques de référence (G1, G2, G3) sont définies par des valeurs colorimétriques limites de référence enregistrées dans une unité (EC) de traitement.

10. Procédé selon la revendication 9 comprenant en outre des étapes de :
• Détermination (MA1) d'au moins une zone de calibration de couleur (Zcal) comprenant une impression de valeurs colorimétriques de calibration (Ccal) imprimées sur le support (S);
• Extraction (MA2) d'une pluralité de valeurs colorimétriques de calibration (Ccal) imprimées dans l'au moins une zone de calibration (Zcal) de couleur;
• Comparaison (MA3) entre des valeurs colorimétriques de calibration enregistrées dans l'unité (EC) de traitement et les valeurs colorimétriques de calibration (Ccal) imprimées sur le support (S) ;
• Détermination (MA4) d'une correction de valeurs colorimétriques sur la base de la comparaison ;
• Application (MA5) de la correction de valeurs colorimétriques aux indicateurs colorimétriques la zone d'intérêt (ZR).

11. Procédé selon la revendication 11, comprenant en outre l'étape suivante :
• Détermination (MR1) d'au moins une zone de gammes correspondant à des gammes de valeurs colorimétriques de référence (G1', G2', G3') imprimées sur le support (S);
• et dans lequel la comparaison d'une valeur de l'information colorimétrique (IC) avec les gammes de valeurs colorimétriques de référence (G1', G2', G3') comprend une comparaison de l'information colorimétrique (IC) avec les gammes colorimétriques de référence (G1', G2', G3') imprimées sur le support (S).

12. Procédé selon l'une des revendications 8 à 11, dans lequel les gammes de couleurs de référence prennent en compte une couleur de la zone dédiée du support (ZS).

13. Procédé selon l'une quelconque des revendications précédentes, dans lequel l'étape d'identification (X6) du résultat du test est réalisée sur la base de l'analyse de l'information colorimétrique (IC) et sur la base d'un indicateur de confiance (OUT) obtenu par un programme d'apprentissage automatique (IA).

14. Procédé selon la revendication 13, comprenant les étapes suivantes :
• Transmission (U1) vers le programme d'apprentissage automatique (IA) d'un ensemble d'information (IN) relatif à un résultat du test (T) ;
• Analyse (U2) de l'ensemble d'information (IN) par le programme d'apprentissage automatique (IA);
• Elaboration (U3) par le programme d'apprentissage automatique (IA) d'un indicateur de confiance (OUT) relatif au résultat du test (T).

15. Procédé selon l'une des revendications 13 ou 14, comprenant une phase d'apprentissage comprenant les étapes suivantes :
• Stockage (A1) d'une pluralité d'ensembles d'informations (IN) relatives à une pluralité de tests et des résultats de test correspondants dans un emplacement informatique dédié;
• Collecte (A2) de valeurs de résultats de test de référence pour chacun des tests de la pluralité de test;
• Injection (A3) dans un programme d'apprentissage automatique (IA) d'une pluralité d'ensembles d'information (IN) relative à la pluralité de tests ;
• Analyse (A4) de la pluralité d'ensembles d'informations (IN) et des résultats de test par un programme d'apprentissage automatique (IA).
